# EUROPÄISCHE PATENTSCHRIFT

(11) **EP 3 464 946 B1**
(45) Veröffentlichungstag und Bekanntmachung des Hinweises auf die Patenterteilung: **08.07.2020**
(21) Anmeldenummer: 17728060.9
(22) Anmeldetag: 31.05.2017
(51) Int. Cl.: F16H 25/20

(54) **LINEARANTRIEB MIT EINER IN EINEM LAGERSCHILD DREHBAR GELAGERTEN SPINDELMUTTER UND SPINDEL**
LINEAR DRIVE WITH A SPINDLE NUT MOUNTED ROTATABLY IN AN END SHIELD, AND SPINDLE
ENTRAÎNEMENT LINÉAIRE COMPRENANT UN ÉCROU DE BROCHE ET UNE BROCHE MONTÉS À ROTATION DANS UN FLASQUE

(30) Priorität: 06.06.2016 DE 102016006736
(43) Veröffentlichungstag der Anmeldung: 10.04.2019
(73) Patentinhaber: SEW-EURODRIVE GmbH & Co. KG, 76646 Bruchsal (DE)
(72) Erfinder: DITTES, Gerhard, 75053 Gondelsheim (DE)
(86) Internationale Anmeldenummer: PCT/EP2017/025155
(87) Internationale Veröffentlichungsnummer: WO 2017/211465

(56) Entgegenhaltungen:
- DE-A1-102007 048 075
- DE-A1-102013 214 733
- DE-T2- 69 912 236
- US-A1- 2005 098 376
- US-B1- 6 672 540

## Beschreibung

Die Erfindung betrifft einen Linearantrieb mit einer in einem Lagerschild drehbar gelagerten Spindelmutter und Spindel.

Es ist allgemein bekannt, dass bei relativer Drehbewegung einer Spindel zu einer Spindelmutter eine relative Linearverschiebung zwischen Spindel und Spindelmutter stattfindet, wenn die Spindel oder die Spindelmutter an der Drehbewegung gehindert wird und die Spindel in die Spindelmutter eingeschraubt ist.

Aus der DE 699 12 236 T2 ist als nächstliegender Stand der Technik ein Verbindungselement mit Gewindespindelantrieb bekannt.

Aus der DE 10 2008 021 861 A1 ist ein Fahrwerksaktuator bekannt.

Aus der DE 10 2008 018 336 A1 ist ein Federbein für Radaufhängungen von Kraftfahrzeugen bekannt.

Aus der DE 41 05 090 A1 ist eine Führungseinrichtung für zusammengesetzte Bewegungen bekannt.

Aus der FR 2 856 452 A1 ist ein Linearantrieb bekannt.

Aus der US 2005 / 098376 A1 ist ein Verfahren zum Steuern eines Fahrzeugs bekannt.

Aus der DE 603 13 938 T2 ist ein Stabilisierungsflossenaktuator mit fehlfunktionsausgelöstem Feststellmechanismus bekannt.

Aus der DE 10 2013 214 733 A1 ist ein Linearantrieb bekannt.

Aus der DE 10 2007 048075 A1 ist ein Kugelgewindetrieb mit angefedertem Lager bekannt.

Aus der US 6 672 540 B1 ist ein Linearaktuator für Flügel bekannt.

Der Erfindung liegt daher die Aufgabe zugrunde, eine hohe Standzeit bei einem Linearantrieb zu erreichen.

Erfindungsgemäß wird die Aufgabe bei dem Linearantrieb nach den in Anspruch 1 angegebenen Merkmalen gelöst.

Wichtige Merkmale bei dem Linearantrieb mit Spindelmutter und Spindel sowie mit einem Lagerschild, in welchem ein Lager aufgenommen ist zur drehbaren Lagerung der Spindelmutter oder Spindel,
wobei die Spindel in die Spindelmutter eingeschraubt ist,
sind, dass am Lagerschild in Querrichtung zur Achse der Spindel hervorragende erste Erhebungen ausgeformt sind zur Verbindung mit einer anzutreibenden Vorrichtung mittels Kardangelenk,
wobei zwei miteinander verbundene Gelenkteile in Querrichtung zur Achse der Spindel hervorragende zweite Erhebungen aufweisen, insbesondere wobei an jedem der Gelenkteile jeweils eine Erhebung angeformt ist,
wobei jedes der Gelenkteile eine Ausnehmung aufweist, in welche jeweils eine erste Erhebung zumindest teilweise eingesteckt ist, insbesondere jeweils mittels Spielpassung, insbesondere also jeweils mittels einer ein Spiel aufweisenden Passung,
wobei die zweiten Erhebungen senkrecht ausgerichtet sind zu den ersten Erhebungen.

Von Vorteil ist dabei, dass die anzutreibende Vorrichtung mittels eines Kardangelenks mit dem Linearantrieb verbindbar ist. Somit sind Verspannungen vermeidbar. Denn durch die in Ausnehmungen mit Spielpassung eingesteckten Erhebungen ist ein Spiel vorhanden, das mittels des Kardangelenks ausgleichbar ist. Somit sind Verspannungen und dadurch bewirkte Verformungen vermeidbar. Dadurch ist die Standzeit erhöht. Denn die durch Verspannungen bewirkten Verformungen bewirken erhöhte Reibungskräfte auf die bewegbaren Teile des Linearantriebs. Außerdem sind Undichtigkeiten bewirkbar, die ebenfalls zur Reduzierung der Standzeit beitragen können, wenn beispielsweise Staub und/oder Schmutz in den Innenraum des Linearantriebs eindringt. Eine Kardangelenk-Befestigung ist nicht nur zwischen dem Lagerschild und der anzutreibenden Vorrichtung, insbesondere Gehäuseteil der anzutreibenden Vorrichtung, vorteilhaft sondern auch zwischen dem bewegbaren Teil des Linearantriebs und einem Teil der anzutreibenden Vorrichtung.

Bei einer vorteilhaften Ausgestaltung ragen zur Zentrierung der beiden Gelenkteile relativ zueinander Bolzen jeweils beidseitig in Ausnehmungen der Gelenkteile hinein,
insbesondere wobei die beiden Gelenkteile mittels Schraubteilen miteinander verbunden sind, insbesondere wobei eine jeweilige Verbindungsschraube durch eine jeweilige Ausnehmung eines Gelenkteils durchgeführt ist und in eine Gewindebohrung des jeweils anderen Gelenkteils eingeschraubt ist, wobei der jeweilige Schraubenkopf das jeweilige Gelenkteil gegen das jeweils andere Gelenkteil drückt. Von Vorteil ist dabei, dass eine verbesserte Zentrierung und somit geringere Verspannung ohne großen Aufwand erreichbar ist. Außerdem sind mittels der Schraubverbindung die beiden Gelenkteile zusammenhaltbar und die vom Kardangelenk durchzuleitenden Kräfte über die Bolzen leitbar, also nicht oder nur unwesentlich über die Verbindungsschrauben.

Bei einer vorteilhaften Ausgestaltung überlappt der in Spindelachsrichtung vom Lagerschild überdeckte Bereich mit dem vom Kardangelenk und/oder von den ersten und/oder zweiten Erhebungen in Spindelachsrichtung überdeckten Bereich. Von Vorteil ist dabei, dass das Kardangelenk in demjenigen Bereich eingreift, in welchem das Lager angeordnet ist. Somit sind hohe Kräfte einleitbar und geringe Verformungen bewirkbar.

Bei einer vorteilhaften Ausgestaltung überlappt der in Spindelachsrichtung vom vom Lagerschild aufgenommenen Lager überdeckte Bereich mit dem vom Kardangelenk, von den beiden Gelenkteilen des Kardangelenks und/oder von den ersten und/oder zweiten Erhebungen in Spindelachsrichtung überdeckten Bereich. Von Vorteil ist dabei, dass das Kardangelenk in demjenigen Bereich eingreift, in welchem das Lager angeordnet ist. Somit sind hohe Kräfte einleitbar und geringe Verformungen bewirkbar.

Bei einer vorteilhaften Ausgestaltung sind die ersten und/oder zweiten Erhebungen zylinderförmig ausgebildet und/oder die am jeweiligen Gelenkteil angeordnete Ausnehmung zur Verbindung mit Spielpassung mit der jeweiligen ersten Erhebung ist zylinderförmig ausgebildet. Von Vorteil ist dabei, dass eine gleichmäßige Belastung für den bei der Auslenkung möglichen Winkelbereich erreichbar ist.

Bei einer vorteilhaften Ausgestaltung weist jedes Gelenkteil einen L-förmigen Grundkörper auf, wobei an einem ersten Schenkel des L die zweite Erhebung angeordnet ist und an dem anderen Schenkel die Ausnehmung angeordnet ist. Von Vorteil ist dabei, dass eine einfache Herstellung erreichbar ist.

Bei einer vorteilhaften Ausgestaltung sind die beiden Gelenkteile des Kardangelenks gleichartig ausgeführt. Von Vorteil ist dabei, dass eine geringe Teilezahl und eine einfache Herstellung erreichbar ist.

Bei einer vorteilhaften Ausgestaltung ist mittels des im Lagerschild aufgenommenen Lagers die Spindelmutter drehbar gelagert, wobei die Spindelmutter drehfest mit einem ersten Verzahnungsteils eines Riemengetriebes verbunden ist, dessen Verzahnung mit einer Verzahnung eines Riemens des Riemengetriebes im Eingriff ist, wobei die Verzahnung des Riemens mit der Verzahnung eines vom ersten Verzahnungsteil beabstandeten zweiten Verzahnungsteils im Eingriff ist,
wobei das zweite Verzahnungsteil drehfest mit der Rotorwelle eines Elektromotors verbunden ist. Von Vorteil ist dabei, dass die Spindelmutter drehbar gelagert ist und somit die Spindel linear verschiebbar ist. Auf diese Weise ist die Lagerung der Spindelmutter zweireihig und auf diese Weise genügend stabil ausführbar.

Bei einer anderen vorteilhaften Ausgestaltung ist mittels des im Lagerschild aufgenommenen Lagers die Spindel drehbar gelagert, wobei die Spindelmutter parallel zur Achsrichtung der Spindel verschiebbar angeordnet ist,
insbesondere indem die Spindelmutter mit einem in eine Nut zumindest teilweise hineinragenden Nutenstein verbunden ist, wobei die Nut sich parallel zur Achsrichtung der Spindel erstreckt, insbesondere in einem Gehäuseteil des Linearantriebs, wobei die Spindel drehfest mit der Rotorwelle eines Elektromotors verbunden ist,
insbesondere wobei mit der Spindelmutter eine Kolbenstange verbunden ist, welche an einem Endbereich des Linearantriebs hervorragt,
insbesondere wobei am von der Spindelmutter abgewandten Endbereich der Kolbenstange ein Teil der anzutreibenden Vorrichtung mittels Kardangelenk verbindbar ist. Von Vorteil ist dabei, dass die Spindel nicht linear verschiebbar angeordnet ist sondern die Spindelmutter.

Hierzu sind nur einfach herstellbare Nuten als Führungsnuten im Gehäuseteil vorzusehen. Die Spindelmutter überträgt die Linearbewegungsmittels einer Kolbenstange vom Innenraum des Spindeltriebs in den Außenbereich. Zwischen der Kolbenstange und dem Gehäuse des Spindeltriebs ist eine Abdichtung vorgesehen.

Bei einer vorteilhaften Ausgestaltung ist die Spindel drehfest mit der Rotorwelle eines Elektromotors verbunden. Von Vorteil ist dabei, dass der Antrieb der Spindel durch einen Elektromotor und somit entsprechend geringer Ausdehnung des Linearantriebs in Querrichtung zur Achsrichtung der Spindel ausführbar ist

Bei einer vorteilhaften Ausgestaltung ist die Spindel drehfest mit einem ersten Verzahnungsteil eines Riementriebs verbunden, wobei die Verzahnung des ersten Verzahnungsteils mit der Verzahnung des Riemens im Eingriff ist, wobei die Verzahnung des Riemens mit einem zweiten Zahnrad im Eingriff ist, welches drehfest mit der Rotorwelle eines Elektromotors verbunden ist und beabstandet ist vom ersten Verzahnungsteil. Von Vorteil ist dabei, dass der Antrieb der Spindel durch einen Elektromotor indirekt über einen zwischen dem antreibenden Elektromotor und der Spindel angeordneten Riementrieb ausführbar ist, wobei dann die Ausdehnung des Linearantriebs in Querrichtung größer ist als in der zuvor genannten Ausgestaltung.

Wichtige Merkmale der Erfindung bei dem Linearantrieb mit einer in einem Lagerschild drehbar gelagerten Spindelmutter und Spindel, insbesondere wobei die Spindel in Wirkverbindung mit der Spindelmutter ist, insbesondere eingeschraubt ist in die Spindelmutter, sind, dass die Spindel durch die Spindelmutter hindurchgeführt ist, und/oder die Spindel beidseitig aus dem Lagerschild hervorragt,
wobei ein erster Faltenbalg einen ersten Bereich der Spindel zumindest teilweise umgibt und ein zweiter Faltenbalg einen zweiten Bereich der Spindel zumindest teilweise umgibt,
insbesondere wobei der erste Bereich und der zweite Bereich voneinander beabstandet sind, insbesondere wobei zumindest das Lagerschild zwischengeordnet ist,
wobei das Lagerschild eine durchgehende Ausnehmung aufweist zum Luftdruckausgleich zwischen dem von dem ersten Faltenbalg umgebenen Luftraum und dem von dem zweiten Faltenbalg umgebenen Luftraum.

Von Vorteil ist dabei, dass eine hohe Schutzart in einfacher Weise erreichbar ist, weil nur ein Luftkanal zwischen den beiden von Faltenbalgen umgebenen Lufträumen zu schaffen ist. Hierzu ist erfindungsgemäß ein durchgehender Luftkanal im Lagerschild angeordnet, so dass die bei Drehbewegung entstehende Wärme von der den Druckausgleich schaffenden Luftströmung zumindest teilweise mitabtransportierbar ist. Somit ist der Linearantrieb hermetisch abgeschlossen ausführbar. Durch den Luftstrom wird die im Bereich des Riementriebs und der Spindelmutter entstehende Wärme aufgespreizt auf den von den Faltenbalgen umgebenen Luftraum. Somit ist eine verbesserte Entwärmung erreichbar.

Bei einer vorteilhaften Ausgestaltung ist das Lagerschild zwischen dem ersten und dem zweiten Faltenbalg angeordnet, insbesondere also der erste Faltenbalg vom zweiten Faltenbalg beabstandet ist, insbesondere mittels zumindest des Lagerschilds. Von Vorteil ist dabei, dass mittels des durchgehenden Luftkanals eine hohe Schutzart infolge der hermetisch dichten Ausführung erreichbar ist.

Bei einer vorteilhaften Ausgestaltung ist der erste Faltenbalg mit einem Abdeckteil verbunden ist, welches lösbar verbunden ist mit einem Deckelteil eines Riementriebs,
wobei das Deckelteil mit einem Gehäuseteil des Riementriebs verbunden ist, welches mit dem Lagerschild verbunden ist, insbesondere an dessen vom zweiten Faltenbalg abgewandten Seite des Lagerschilds,
wobei das Lagerschild, insbesondere an dessen vom ersten Faltenbalg abgewandter Seite, mit einem Deckelteil verbunden oder einstückig ausgeführt ist,
wobei der zweite Faltenbalg mit dem Deckelteil verbunden ist. Von Vorteil ist dabei, dass eine einfache Herstellung ermöglicht ist.

Bei einer vorteilhaften Ausgestaltung ist die Spindelmutter drehfest mit einem Verzahnungsteil des Riementriebs verbunden,
insbesondere wobei die Verzahnung des Verzahnungsteils im Eingriff ist mit einem Riemen, insbesondere Zahnriemen, des Riementriebs,
wobei der Riemen mit der Verzahnung eines weiteren Verzahnungsteils im Eingriff ist,
wobei das weitere Verzahnungsteil drehfest mit der Rotorwelle eines Elektromotors verbunden ist. Von Vorteil ist dabei, dass die Spindelmutter mittels eines koaxial angeordneten Motors antreibbar ist, der beabstandet ist. Somit ist eine in axialer Richtung, also in Achsrichtung der Spindel, gesehene kompakte Ausführung ermöglicht. Der in Querrichtung benötigte Bauraum ist dabei allerdings erhöht. Trotzdem ist eine hermetisch dichte Ausführung ermöglicht.

Bei einer vorteilhaften Ausgestaltung weist das Abdeckteil eine durchgehende Ausnehmung auf, welche einen Luftdurchlass zwischen dem von dem ersten Faltenbalg umgebenen Luftraum und dem vom Riementrieb, insbesondere vom Gehäuseteil des Riementriebs umgebenen und vom Deckelteil sowie vom Abdeckteil Luftraum, umgebenen Luftraum bewirkt. Von Vorteil ist dabei, dass eine verbesserte Entwärmung erreichbar ist.

Bei einer vorteilhaften Ausgestaltung weist das insbesondere mit dem zweiten Faltenbalg verbundene Deckelteil eine durchgehende Ausnehmung auf, welche einen Luftdurchlass zwischen dem von dem zweiten Faltenbalg umgebenen Luftraum und der durch das Lagerschild durchgehenden Ausnehmung bewirkt. Von Vorteil ist dabei, dass ein Luftdruckausgleich in einfacher Weise erreichbar ist und eine verbesserte Entwärmung.

Bei einer vorteilhaften Ausgestaltung nimmt das Lagerschild ein Lager auf und die durch das Lagerschild durchgehende Ausnehmung ist vom Lager beabstandet,
insbesondere einen größeren Radialabstand aufweist als das Lager, insbesondere zur Achse der Spindel. Von Vorteil ist dabei, dass die Wärme des Lagers abtransportierbar ist mittels des durchgehenden Luftstroms, welcher vom bei Linearbewegung der Spindel entstehenden Druckunterschied zwischen den von den Faltenbalgen umgebenen Lufträumen angetrieben wird.

Bei einer vorteilhaften Ausgestaltung mündet die durch das Lagerschild durchgehende Ausnehmung einerseits in die durch das Deckteil durchgehende Ausnehmung und andererseits in den vom Riementrieb umgebenen Luftraum. Von Vorteil ist dabei, dass auch die im Riementrieb erzeugte Wärme vom durch den bei Linearbewegung entstehenden Luftdruckunterschied angetriebenen Luftstrom Wärme abtransportierbar ist.

Bei einer vorteilhaften Ausgestaltung ist im Lagerschild oder am Deckelteil ein Wellendichtring aufgenommen, welcher zur Spindelmutter hin abdichtet,

insbesondere wobei der vom zweiten Faltenbalg umgebene Luftraum gegenüber dem vom Lager überdeckten Raumbereich abgedichtet ist mittels des Wellendichtrings. Von Vorteil ist dabei, dass der das Deckelteil und das Lagerschild durchdringende Luftkanal auch die vom Wellendichtring bei Drehbewegung der Spindel erzeugte Wärme abtransportierbar macht mittels des vom Druckunterschied angetriebenen Luftstroms.

Bei einer vorteilhaften Ausgestaltung sind am Lagerschild in Querrichtung zur Achsrichtung der Spindel hervorragende Erhebungen ausgeformt, an welchen die anzutreibende Vorrichtung mittels eines Kardangelenks oder Kreuzgelenks verbindbar ist,
insbesondere wobei die Drehachsen dieses Gelenks jeweils senkrecht zur Achsrichtung der Spindel ausgerichtet sind, insbesondere wobei die Drehachsen einen verschwindenden Abstand zueinander aufweisen. Von Vorteil ist dabei, dass Verspannungen vermeidbar sind und somit die Standzeit insgesamt verlängert ist.

Bei einer vorteilhaften Ausgestaltung sind am Lagerschild in Querrichtung zur Achsrichtung der Spindel hervorragende Erhebungen ausgeformt, an welchen ein Kardangelenk oder Kreuzgelenk angeordnet ist zur Verbindung mit einer anzutreibenden Vorrichtung,
insbesondere wobei die Drehachsen dieses Gelenks jeweils senkrecht zur Achsrichtung der Spindel ausgerichtet sind, insbesondere wobei die Drehachsen einen verschwindenden Abstand zueinander aufweisen. Von Vorteil ist dabei, dass Verspannungen vermeidbar sind und somit die Standzeit insgesamt verlängert ist.

Bei einer vorteilhaften Ausgestaltung ist an einem Endbereich der Spindel ein Kardangelenk oder Kreuzgelenk zur Verbindung mit einem Teil der anzutreibenden Vorrichtung angeordnet,
insbesondere wobei die Drehachsen dieses Gelenks jeweils senkrecht zur Achsrichtung der Spindel ausgerichtet sind, insbesondere wobei die Drehachsen voneinander beabstandet sind. Von Vorteil ist dabei, dass Verspannungen vermeidbar sind und somit die Standzeit insgesamt verlängert ist.

Weitere Vorteile ergeben sich aus den Unteransprüchen.

Die Erfindung wird nun anhand von Abbildungen näher erläutert:
In der Figur 1 ist eine Schnittansicht eines Linearantrieb gezeigt, wobei ein Elektromotor 7 über einen Riementrieb einen Spindeltrieb antreibt, wobei der Elektromotor 7 über den Riementrieb beabstandet vom Spindeltrieb angeordnet ist und die Spindel 17 des Spindeltriebs axial beidseitig aus einem Lagerschild 1 des Spindeltriebs hervorragt und axial vorwärts oder rückwärts bewegbar ist.
In der Figur 2 ist ein am Lagerschild 1 angeordnetes Kardangelenk des Spindeltriebs angeschnitten dargestellt.

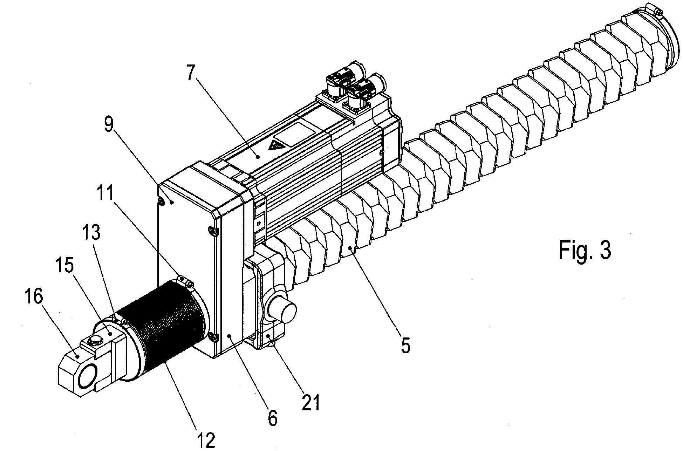

In der Figur 3 ist der Linearantrieb in Schrägansicht dargestellt.
In der Figur 4 ist ein Ausschnitt des Linearantriebs in Schrägansicht angeschnitten dargestellt.
In der Figur 5 ist das Lagerschild 1 angeschnitten in Schrägansicht dargestellt, so dass ein im Lagerschild angeordneter Luftkanal ersichtlich ist.
In der Figur 6 ist ein Ausschnitt des Linearantriebs in Schrägansicht aus einer anderen Blickrichtung als in Figur 4 dargestellt.
In der Figur 7 ist ein Ausschnitt des Linearantriebs im Querschnitt gezeigt, so dass die axiale Luftdurchführung erkennbar ist.
In der Figur 8 ist ein Teil des Kardangelenks in explodierter Ansicht dargestellt.
In der Figur 9 ist ein anderer erfindungsgemäßer Linearantrieb in Schrägansicht dargestellt, bei welchem der Elektromotor 7 die Spindel des Spindeltriebs direkt antreibt, also koaxial zum Spindeltrieb angeordnet ist.
In der Figur 10 ist der zu Figur 9 gehörige Spindeltrieb angeschnitten dargestellt.
In der Figur 11 ist ein weiterer erfindungsgemäßer Linearantrieb gezeigt, wobei der Spindeltrieb der Figur 9 über einen Riementrieb von einem über den Riementrieb beabstandeten Elektromotor 7 angetrieben wird.

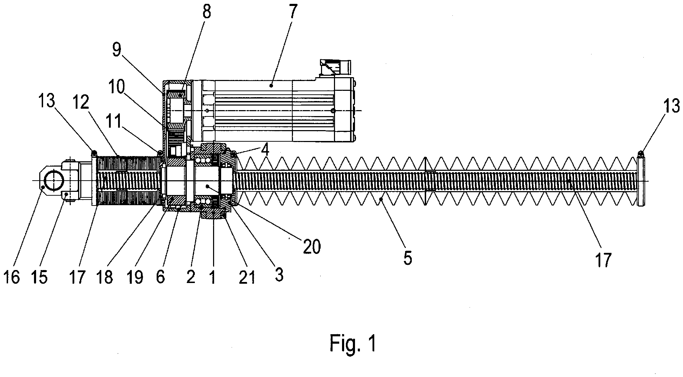

Wie in Figur 1 gezeigt, treibt ein Elektromotor 7 über einen Riementrieb einen Spindeltrieb an. Dabei ist ein Verzahnungsteil 8 drehfest verbunden mit der Rotorwelle des Elektromotors 7. Mittels des Verzahnungsteils 8 wird ein Riemen 10 angetrieben, dessen Verzahnung mit der Verzahnung des Verzahnungsteils 8 im Eingriff steht.

Das Gehäuse des Elektromotors 7 ist mit einem Gehäuseteil 6 des Riementriebs schraubverbunden.

Beabstandet von dem Gehäuseteil 6 des Riementriebs ist ein Lagerschild 1 verbunden mit dem Gehäuseteil 6 des Riementriebs.

Im Lagerschild 1 ist ein zweireihiges Wälzlager 2 aufgenommen, das zur drehbaren Lagerung einer Spindelmutter 20 vorgesehen ist. Mit der Spindelmutter 20 ist ein Verzahnungsteil 19 drehfest verbunden, dessen Verzahnung ebenfalls mit dem Riemen 10 im Eingriff steht. Somit ist die Spindelmutter 20 vom Riemen 10 antreibbar.

Ins Innengewinde der Spindelmutter 20 ist eine Spindel 17 eingeschraubt. Die Spindel 17 ragt aus der Spindelmutter 20 axial beidseitig heraus.

Bei Drehung der Spindelmutter 20 verschiebt sich somit die Spindel 17, solange diese an der Drehbewegung gehindert wird. Hierzu ist die Spindel 17 über ein Kardangelenk mit einer weiteren in der Figur 1 nicht gezeigten, von dem Linearantrieb anzutreibenden Vorrichtung antreibbar. Dabei ist am Ende ein Bolzen in Bohrlöcher eine Gelenkaufnahmeteils 15 eingeführt, so dass der Bolzen drehbar gelagert ist in den zueinander koaxial ausgerichteten Bohrlöchern des Gelenkaufnahmeteils 15.

Zwischen den Bohrlöchern ist der Bolzen auch durchgehend durch ein durch ein Gelenkteil 16 durchgehendes Bohrloch ausgerichtet. Beabstandet von dem Bolzen weist das Gelenkteil 16 auch eine weitere durchgehende Bohrung auf, so dass hier ein Bolzen der anzutreibenden Vorrichtung hindurchführbar, der aber vorzugsweise senkrecht ausgerichtet ist zum vorgenannten Bolzen. Auf diese Weise ist also die Spindel 17 mittels eines Kardangelenks mit der anzutreibenden Vorrichtung verbindbar.

Abtriebsseitig ist mit dem Gehäuseteil 6 des Riementriebs ein Deckelteil 9 schraubverbunden, so dass das Innere des Riementriebs geschützt angeordnet ist.

Mit dem Gehäuseteil 6 ist ein Deckelteil 9 schraubverbunden. Das Gehäuseteil 6 ist zusammen mit dem Deckelteil 9 infolge vorgesehener Langlöcher relativ verschiebbar zum Lagerschild, wenn entsprechende Verbindungsschrauben gelöst werden. Auf diese Weise ist der Achsabstand zwischen der Rotorwellenachse und der Spindelachse der Spindel 17 einstellbar, also die Riemenspannung einstellbar.

Das zweireihige Lager 2 ermöglicht einen sehr kompakten Aufbau.

Auf der von der Abtriebsseite axial abgewandten Seite ist am Lagerschild 1 ein Deckelteil 3 angeordnet, welches schraubverbunden ist mit dem Lagerschild 1.

Ein Faltenbalg 5, welcher die Spindel 17 umgibt ist mittels eines Klemmteils 4, insbesondere Klemmschelle, klemmverbunden mit dem Deckelteil 3. Auf dem vom Deckelteil 3 axial abgewandten Endbereich der Spindel 17 ist das andere Ende des Faltenbalgs 5 ebenfalls mit einem Klemmteil 13, insbesondere Klemmschelle, mit der Spindel 17 verbunden . Somit umgibt der Faltenbalg 5 ein Luftvolumen, in welchem ein Bereich der Spindel 17 angeordnet ist.

Der Elektromotor 7 treibt mittels seiner Rotorwelle den Riementrieb an, so dass die Spindelmutter 20 gedreht wird. Die Spindel 17 ist zumindest an einem ihrer Endbereiche mit einer anzutreibenden Vorrichtung verbunden, so dass sie an der Drehbewegung gehindert ist. Somit muss die Spindel 17 sich in Abhängigkeit von der Drehbewegung der Spindelmutter 20 linear, also axial vorwärts oder rückwärts bewegen.

Das vom Faltenbalg5 eingeschlossene Luftvolumen ist also abhängig von der Position der Spindel 17.

Des Weiteren sind Langlöcher am Gehäuseteil 6 des Riementriebs ausgeführt, so dass die Riemenspannung einstellbar ist.

Das Abdeckteil 18 ist auf der axial vom Lagerschild 1 und vom Deckelteil 3 abgewandten Seite des Riementriebs abgewandten Seite angeordnet und mit einem weiteren Faltenbalg 12 mittels eines weiteren Klemmteils 11, insbesondere Klemmschelle, klemmverbunden. Das Abdeckteil 18 mit Wellendichtring zur Abdichtung der drehenden Spindelmutter 20, ist zum Deckelteil 9 über Langlöcher verschieblich. Damit kann der Achsversatz durch das Riemenspannen kompensiert werden.

Ebenfalls mittels eines weiteren Klemmteils 13, insbesondere Klemmschelle, ist die Spindel 17 an ihrem vom Abdeckteil 18 abgewandten Endbereich klemmverbunden. Somit ist vom weiteren Faltenbalg 12 ein weiteres Luftvolumen eingeschlossen, in welchem sich ein Bereich der Spindel 17 befindet

Wenn nun die Linearposition der Spindel 17 sich ändert, ändert sich auch das von dem Faltenbalg 5 umschlossene Luftvolumen und zwar um etwa denselben Betrag, um den sich das vom Faltenbalg 12 umschlossene Luftvolumen ändert.

Die beiden Lufträume, also der zwischen Spindel 17 und Faltenbalg 5 angeordnete Luftraum und der zwischen Spindel 17 und Faltenbalg 12 angeordnete Luftraum, sind über einen Luftkanal verbunden, der mittels entsprechender Ausnehmungen im Abdeckteil 18, im Lagerschild 1 und im Deckelteil 3 angeordnet ist.

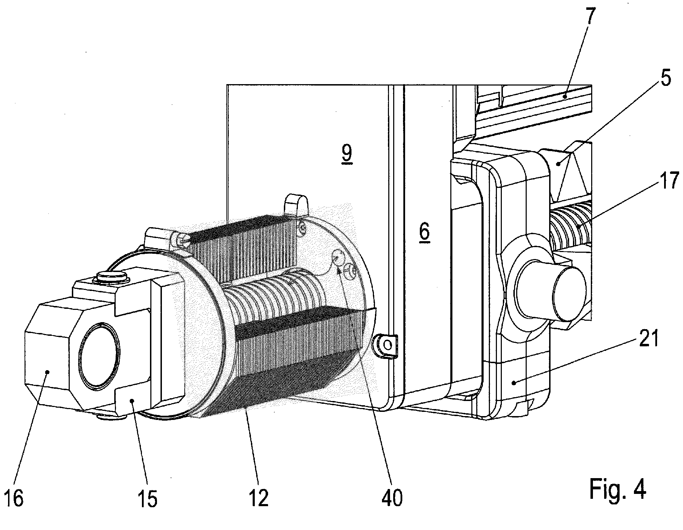

Wie in Figur 4 gezeigt, weist das Abdeckteil 18 also eine axial durchgehende Ausnehmung 40 auf, die den vom Faltenbalg 12 umgebenen Luftraum mit dem vom Riementrieb umgebenen Luftraum verbindet.

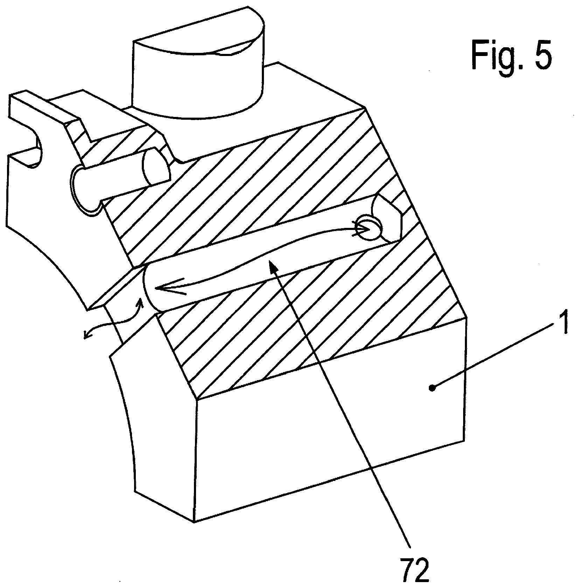

Wie in Figur 5 gezeigt weist das Lagerschild 1 eine Ausnehmung 72 auf, die als Luftkanal wirkt. Dabei wird die Luft radial um das vom Lagerschild 1 aufgenommene zweireihige Lager 2 herumgeführt. Somit wird die vom Lager 2 und von der Spindelmutter 20 erzeugte Wärme von der durch die Ausnehmung 72 strömende Luft aufgenommen. Da das Lager 2 zweireihig ausgeführt ist, wird eine hohe Wärmemenge in kleinem Volumen erzeugbar. Somit nimmt das Lagerschild 1 den so erzeugten Wärmestrom zunächst auf und wird dann zumindest teilweise über den durch die Ausnehmung 72 gebildeten Luftkanal entwärmt.

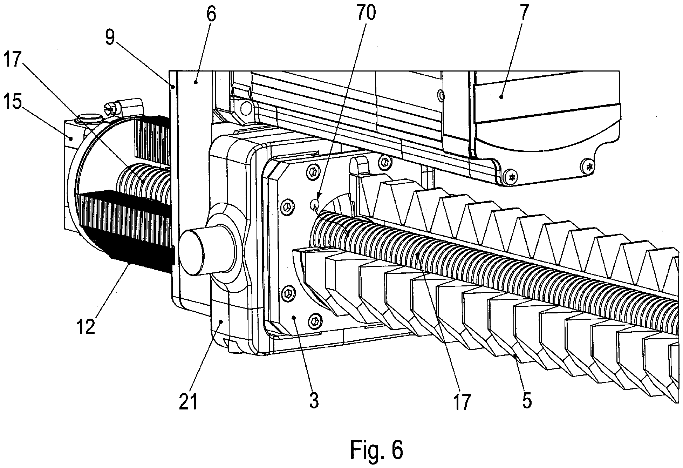

Wie in Figur 6 gezeigt, mündet die Ausnehmung 72 an ihrem dem Deckelteil 3 zugewandten Endbereich in der Öffnung 70 im Deckelteil 3, so dass Luft durchleitbar ist zu dem vom Faltenbalg 5 umschlossenen Luftraum.

Auf diese Weise ist ein Luftausgleich zwischen den von den Faltenbalgen (5, 12) umgebenen Lufträumen herstellbar und es entsteht auch bei Änderungen der Linearposition der Spindel 17 keine unzulässig hohen Überdrucke. Der Luftdruck in den beiden von den Faltenbalgen (5, 12) umgebenen Lufträumen ist also im Wesentlichen konstant. Dadurch können dünnwandige, kompaktbauende Faltenbälge verwendet werden, da Verformungen durch Druckunterschiede nicht auftreten.

Da die Summe der Volumina der beiden Lufträume unabhängig ist von der Linearposition der Spindel 17, wirkt für das Gesamtvolumen die Linearbewegung nur als isochorer Prozess.

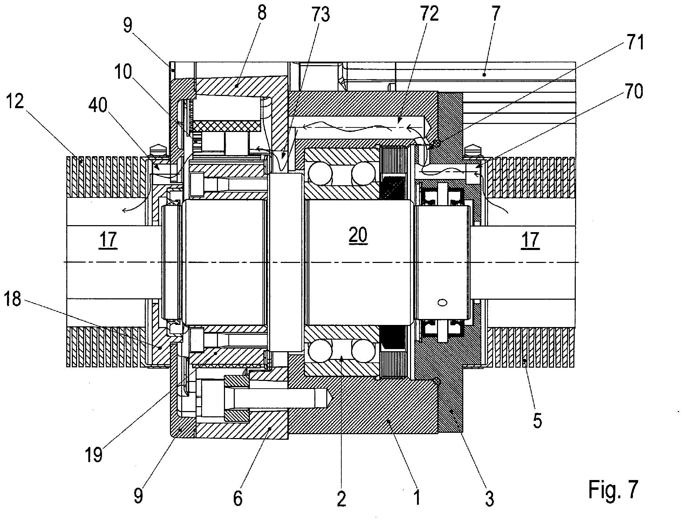

Wie in Figur 7 näher dargestellt, weist der in dem Lagerschild eingebrachte Luftkanal eine Radialbohrung 71 auf, welche vom Radialabstand der Öffnung 70 auf einen Radialabstand führt, welcher größer ist als der größte vom Lager 2 überdeckte Radialabstand. Die Radialbohrung 71 mündet in die Ausnehmung 72, welche als axiale Bohrung ausgeführt ist, welche nicht durchgehend ausgeführt sein muss, also als Sacklochbohrung ausgeführt sein darf.

Die Ausnehmung 72 ist also radial von dem Außenring des Lagers 2 beabstandet.

Die Ausnehmung 72 mündet über einen wiederum radial verlaufenden Spalt, also eine radial verlaufende Ausnehmung im vom Riementrieb umgebenen Luftraum, der über die Ausnehmung 40 mit dem vom Faltenbalg 12 umgebenen Luftraum verbunden ist.

Das Lager 2 ist an seinem dem Faltenbalg 12 zugewandten Endbereich gegen einen im Lagerschild 1 ausgebildeten Absatz angestellt und von einem auf der axial davon abgewandten Seite angeordneten, mit dem Lagerschild 1 schraubverbundenen Klemmring angedrückt.

Die Ausnehmung 70 ist radial von einem im Deckelteil 3 aufgenommenen Wellendichtring beabstandet und entwärmt somit das Deckelteil 3, wenn ein Luftstrom durch die Ausnehmung 70 strömt.

Da vom Lager 2, von der Spindelmutter 20 und dem Wellendichtring nur Wärme erzeugt wird, wenn der Motor eine Drehbewegung der Spindelmutter 20 erzwingt, wird die Wärme abtransportiert von dem durch die dadurch erzwungene Änderung der Linearposition bewirkten Luftstrom zum Druckausgleich zwischen den von den Faltenbalgen (5, 12) umgebenen Lufträumen.

Am Lagerschild 1 ist beidseitig in Querrichtung zur Achsrichtung der Spindel 17 jeweils eine Erhebung ausgebildet, die als vorzugsweise zylindrischer Zapfenabschnitt hervorsteht und ausgeformt ist.

Zur Befestigung am stationären Teil der anzutreibenden Vorrichtung ist ein Kardangelenk vorgesehen.

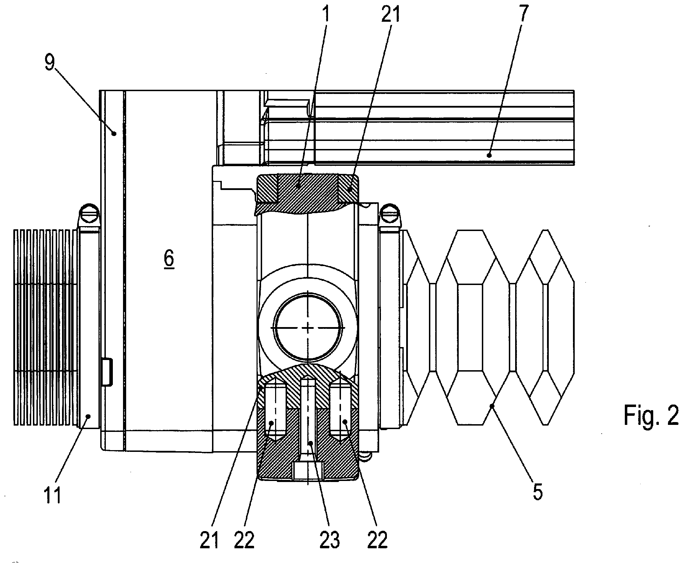

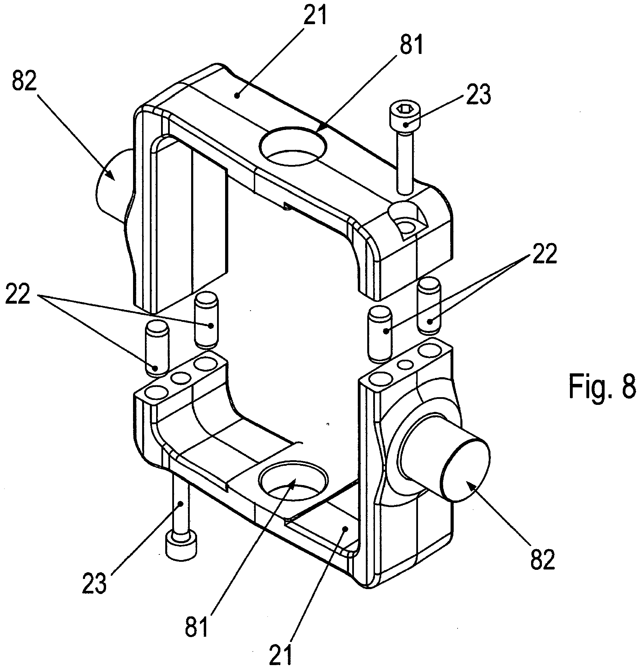

Wie in Figur 2 zusammen mit Figur 8 gezeigt, ist auf die jeweilige Erhebung ein jeweiliges Gelenkteil 21 aufgesteckt, wobei die beiden Gelenkteile mittels eines oder mehreren Schraubteilen 23 miteinander verbunden sind und dabei die beiden Gelenkteile durch Bolzen 22 zentriert sind, welche in jeweilige Sacklöcher der beiden Gelenkteile 21 eingesteckt sind.

Die Kraftübertragung erfolgt ganz oder zumindest im Wesentlichen über den Formschluss der Bolzen 22.

Jedes der Gelenkteile 21 weist jeweils eine runde, insbesondere zylindrische Ausnehmung 81 auf, durch welche die jeweilige Erhebung des Lagerschilds 1 gesteckt ist.

Die beiden Gelenkteile 21 sind gleichartig ausgeführt und - wie in der in Figur 8 dargestellten explodierten Darstellung gezeigt - mittels in Sacklochbohrungen teilweise eingesteckten Bolzen 22 zentriert. Mittels der Schraubteile 23 sind die beiden Gelenkteile 21 aneinander gedrückt, insbesondere ist das jeweilige Schraubteil durch ein Bohrloch eines jeweiligen Gelenkteils 21 durchgesteckt und mit seinem Gewindebereich eingeschraubt in eine Gewindebohrung des jeweils anderen Gelenkteils 21, so dass der jeweilige Schraubenkopf des jeweiligen Schraubteils das erste Gelenkteil 21 gegen das andere drückt.

An jedem Gelenkteil 21 ist ein jeweiliger Zapfenabschnitt 82 ausgeformt, der in Querrichtung zur Achsrichtung der Spindel 17 und in Querrichtung zu den Erhebungen des Lagerschildes nach außen hervorragt.

Zur Reduzierung der Reibung sind die Erhebungen und/oder Zapfenabschnitte 82 oberflächenbehandelt, insbesondere karbonitriert. Die Erhebungen sind mittels Spielpassung in die Ausnehmungen 81 eingesteckt. Ebenso sind die Zapfenabschnitte 82 mit Spielpassung in entsprechenden Ausnehmungen der anzutreibenden Vorrichtung eingesteckt. Auf diese Weise ist ein nicht verschwindender Bewegungsfreiheitsgrad vorhanden.

Der Vorteil der zweiteiligen Ausführung des Kardangelenkstücks gemäß Figur 8 ist, dass eine einfache Montage ausführbar ist. Denn die beiden Gelenkteile 21 werden jeweils von radial außen kommend mit ihren Ausnehmungen 81 auf die am Lagerschild 1 ausgebildeten Zapfenabschnitte aufgeschoben und dann miteinander schraubverbunden. Auf diese Weise ist eine einfache Montage ermöglicht.

Der vom Kardangelenk in axialer Richtung, also in der Linearantriebsrichtung des Linearantriebs, überdeckte Bereich überlappt mit dem vom Lager 2 axial überdeckten Bereich und auch mit dem vom Lagerschild 1 axial überdeckten Bereich.

Somit ist eine erhöhte Stabilität erreichbar. Denn der durch die Spielpassungen bewirkte Freiheitsgrad findet somit im Beriech des Lagers 2 seinen Ursprung.

Am vom Lagerschild 1 abgewandten Endbereich der Spindel 17 ist diese zum Faltenbalg 5 hin luftdicht abgeschlossen und somit auch vor Verschmutzung durch Schmutzpartikel der Umgebung geschützt.

Am anderen Endbereich der Spindel 17 ist diese ebenfalls luftdicht abgeschlossen zum weiteren Faltenbalg 12 hin. Außerdem ist an diesem Endbereich ein Gelenkaufnahmeteil 15 mit der Spindel verbunden, das einen Bolzen lagert, der in einer Bohrung eines Gelenkteils 16 aufgenommen ist. Das Gelenkteil 16 weist eine Bohrung auf, die quer zum im Gelenkteil aufgenommenen Bolzen ausgerichtet ist.

Somit ist auch hier eine Verbindung mit der anzutreibenden Vorrichtung über ein Kardangelenk ermöglicht, welche Winkelfehler ausgleicht und somit Verspannungen reduzierbar oder vermeidbar macht. Vorzugsweise ist das Kardangelenk zweiwertig ausgeführt.

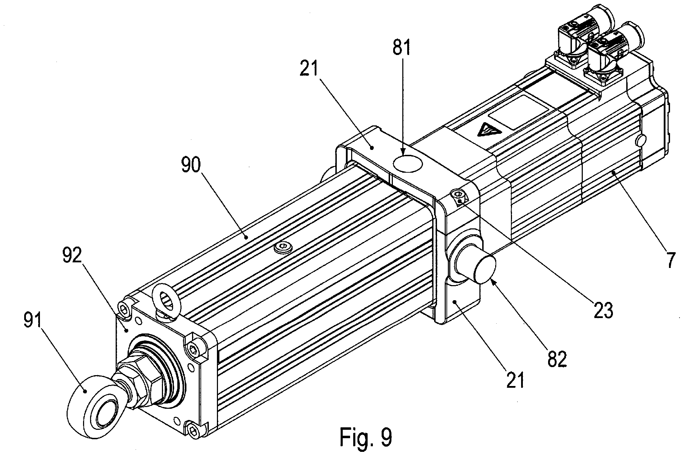

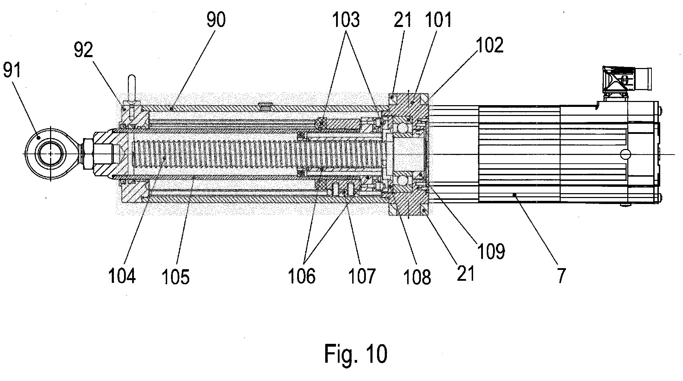

Wie in Figur 9 und 10 gezeigt, ist die Verbindung mit der anzutreibenden Vorrichtung über ein Kardangelenk auch bei einem anderen Linearantrieb ermöglicht, bei welchem der Elektromotor 7, insbesondere dessen Rotorwelle kollinear mit der Spindel 104 angeordnet ist.

Dabei ist nicht die mit der Rotorwelle des Elektromotors 7 drehfest verbundene Spindel 104 linear bewegbar sondern die Spindelmutter 106. Da die Spindel 104 drehfest mit der linear nicht verschiebbar angeordneten Rotorwelle des Elektromotors 7 verbunden ist, wird bei Drehen der Rotorwelle die Spindelmutter 106 linear verschoben, da ein Nutenstein107 mit der Spindelmutter 106 schraubverbunden ist und in eine axial sich erstreckende Nut des Gehäuseteils 90 eintaucht. Somit ist der Nutenstein 107 nur in axialer Richtung entlang der Nut, also Längsnut, bewegbar. Mit der Spindelmutter 106 ist eine Kolbenstange 105 verbunden, welche mit der Spindelmutter 106 linear verfährt und am vom Motor 7 abgewandten Endbereich des Gehäuseteils 90 aus einem mit dem Gehäuseteil 90 verbundenen Deckelteil 92 herausragt. Zwischen dem Gehäuseteil 90 und der Kolbenstange 105 ist eine Dichtung angeordnet.

Am vom Elektromotor 7 abgewandten Endbereich der Kolbenstange 105 ist ein Gelenkteil 91 angeordnet, so dass auch hier eine Befestigung mittels eines Kugelgelenks ausführbar ist. Dabei ist das die Kolbenstange 105 in ein Verschlussteil eingeschraubt, welches das vom Lagerschild 101 abgewandte Ende der hohlen, insbesondere hohlzylindrisch ausgeführten, Kolbenstange 105 abschließt.

Bei dieser Ausführung ist ein Kugelgelenk mit zusätzlichem Freiheitsgrad möglich, da die Kolbenstange verdrehgesichert ausführt; ansonsten müsste das Reaktionsmoment der Spindel über ein Kreuzgelenkteil in die anzutreibende Vorrichtung abgeleitet werden.

Am dem Elektromotor 7 zugewandten Endbereich des Gehäuseteils 90 ist ein Lagerschild 101 angeordnet, welches ein Lager 102 aufnimmt, mittels dessen die Rotorwelle gelagert ist. Das Lager 102 ist von einem ins Lagerschild 101 eingeschraubten Klemmring 108 gegen eine Stufe des Lagerschildes 101 gedrückt.

An der Spindelmutter 106 sind axial beidseitig Dämpfungsringe 103 angeordnet. Somit ist ein hartes Aufschlagen an den axialen Endpositionen verhindert. Der dem Lagerschild 101 zugewandt angeordnete Dämpfungsring 103 schlägt an der ersten axialen Endposition auf einen Klemmring 108 auf, der ins Lagerschild 101 eingeschraubt ist und das Lager 102 gegen einen am Lagerschild 101 ausgebildeten Absatz andrückt. Die über das Lager 102 gelagerte, mit der Spindel 104 drehfest verbundene Rotorwelle ist mittels eines ebenfalls im Lagerschild 101 aufgenommenen Wellendichtrings 109 abgedichtet. Somit ist der zumindest teilweise mit Schmierstoff befüllte Innenraum des Spindeltriebs, insbesondere das mit dem Schmierstoff geschmierte Lager 102, abgedichtet von dem Innenraum des Elektromotors.

Das Lagerschild 101 weist wiederum hervorragende Erhebungen auf, so dass ein Kardangelenk gemäß Figur 8 vorsehbar ist. Auf diese Weise ist wiederum die anzutreibende Vorrichtung mittels Kardangelenk verbindbar, wobei der vom Kardangelenk überdeckte axiale Bereich wiederum überlappt mit dem vom Lager 102 überdeckten Bereich und/oder mit dem vom Lagerschild 101 überdeckten axialen Bereich. Somit ist das Kardangelenk wiederum in demjenigen Bereich angeordnet, in welchem große Kräfte einleitbar sind, insbesondere also ins Lagerschild 101. Somit ist eine hohe Stabilität erreichbar.

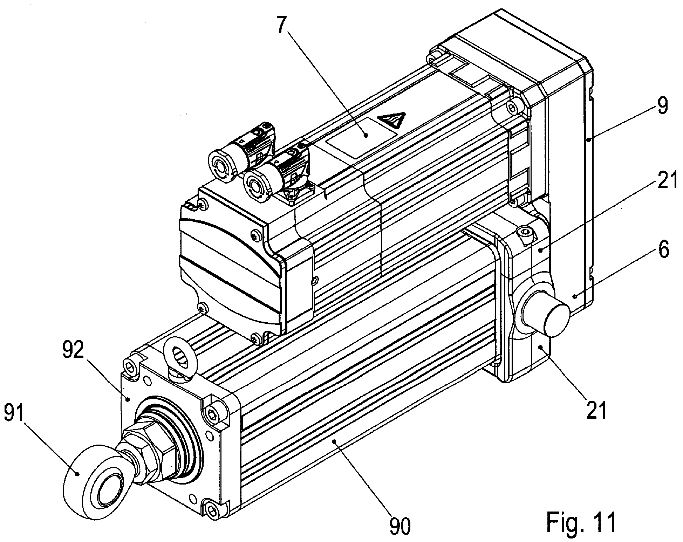

Wie in Figur 11 gezeigt, ist bei einem weiteren Ausführungsbeispiel der Spindeltrieb nach Figur 9 und 10 verwendbar, wobei statt des Antriebs der Spindel 104 durch einen Elektromotor die Spindel 104 mittels eines Riementriebs angetrieben wird, welcher durch einen Elektromotor 7 angetrieben ist. Auf diese Weise sind wiederum Elektromotor 7 und Spindeltrieb voneinander beabstandet angeordnet.

Das Lagerschild stellt dabei eine erste Lagerstelle zur Verfügung. Dabei sitzt im Riemengehäuse 6 eine zusätzliche Lagerstelle mit Riemenscheibe, welche das Lager und eine Rotationsabdichtung vor Kräften des Riemenzuges entkoppelt. Die Spindel ist dabei drehfest verbunden mit einem ersten Verzahnungsteil des Riementriebs, wobei die Verzahnung des Verzahnungsteils im Eingriff ist mit der Verzahnung des Riemens des Riementriebs, wobei die Verzahnung des Riemens des Riementriebs auch im Eingriff ist mit einem zweiten Verzahnungsteil des Riementriebs, welches drehfest mit der Rotorwelle des Elektromotors 7.

Am Lagerschild des Spindeltriebs sind wiederum in Querrichtung zur Achsrichtung der Spindel 104 Erhebungen ausgeformt, welche vorzugsweise als zylindrische Zapfenabschnitte ausgeformt sind. Auf diese Erhebungen des Lagerschildes ist wiederum ein jeweiliges Gelenkteil 21 aufsetzbar. Somit ist das Kardangelenk nach Figur 8 auf dem Lagerschild anordenbar und auf diese Weise die anzutreibende Vorrichtung über ein Kardangelenk verbindbar.

Bei weiteren erfindungsgemäßen Ausführungsbeispielen ist statt des jeweiligen Kardangelenks auch ein anderes Kreuzgelenk verwendbar.

Bei weiteren erfindungsgemäßen Ausführungsbeispielen ist statt des Zahnriemens ein Riemen verwendet, welcher statt mit den entsprechenden Verzahnungsteilen mit Riemenscheiben in kraftschlüssiger Verbindung ist. Dabei ist die erste Riemenscheibe mit der Rotorwelle des Elektromotors drehfest verbunden und die zweite Riemenscheibe drehfest mit der Spindelmutter bei der Ausführung nach Figur 1 verbunden beziehungswiese bei der Ausführung nach Figur 11 mit der Spindel drehfest verbunden.

### Bezugszeichenliste

1 Lagerschild
2 Wälzlager, insbesondere zweireihiges Wälzlager
3 Deckelteil
4 Klemmteil, insbesondere Schelle
5 erster Faltenbalg
6 Gehäuseteil für Riementrieb
7 Elektromotor
8 Verzahnungsteil
9 Deckelteil
10 Riemen, insbesondere Zahnriemen
11 Klemmteil, insbesondere Schelle
12 zweiter Faltenbalg
13 Klemmteil, insbesondere Schelle
15 Gelenkaufnahmeteil
16 Gelenkteil
17 Spindel, insbesondere Gewindespindel
18 Abdeckteil
19 Verzahnungsteil
20 Spindelmutter
21 Gelenkteil
22 Bolzen
23 Schraubteil
40 Ausnehmung, insbesondere durch das Abdeckteil 18 durchgehende Ausnehmung
70 Öffnung mit durch das Deckelteil 3 durchgehender Ausnehmung
71 Radialbohrung
72 Ausnehmung, insbesondere Umlenkanal
73 Öffnung, insbesondere ringförmige Ringöffnung
81 Durchlass für Zapfenabschnitt
82 Zapfenabschnitt
90 Gehäuseteil für Spindeltrieb
91 Gelenkteil
92 Deckelteil
101 Lagerschild
102 Wälzlager, insbesondere Kugellager
103 Dämpfungsring
104 Spindel
105 Kolbenstange
106 Spindelmutter
107 Nutenstein
108 Klemmring, eingeschraubt ins Lagerschild 101
109 Wellendichtring

## Patentansprüche

1. Linearantrieb mit Spindelmutter (20) und Spindel (17) sowie mit einem Lagerschild (1), in welchem ein Lager (2) aufgenommen ist zur drehbaren Lagerung der Spindelmutter (20) oder Spindel,
**wobei die Spindel (17) in die Spindelmutter (20) eingeschraubt** ist,
**wobei** am Lagerschild (1) beidseitig in Querrichtung zur Achse der Spindel (17) hervorragende erste Erhebungen ausgeformt sind zur Verbindung mit einer anzutreibenden Vorrichtung mittels eines zweiwertigen, insbesondere nicht dreiwertigen, Kardangelenks oder Kreuzgelenks,
**dadurch gekennzeichnet, dass**
zwei miteinander verbundene Gelenkteile (21) in Querrichtung zur Achse der Spindel (17) hervorragende zweite Erhebungen (82) aufweisen, insbesondere wobei an jedem der Gelenkteile (21) jeweils eine Erhebung angeformt ist, wobei jedes der Gelenkteile (21) eine Ausnehmung (81) aufweist, in welche jeweils eine erste Erhebung des Lagerschilds (1) eingesteckt ist, insbesondere jeweils mittels Spielpassung, insbesondere also jeweils mittels einer ein Spiel aufweisenden Passung,
wobei die zweiten Erhebungen (82) senkrecht ausgerichtet sind zu den ersten Erhebungen.

2. Linearantrieb nach Anspruch 1,
**dadurch gekennzeichnet, dass**
zur formschlüssigen Kraftübertragung und Zentrierung der beiden Gelenkteile (21) relativ zueinander Bolzen jeweils beidseitig in Ausnehmungen der Gelenkteile (21) hineinragen, insbesondere wobei die beiden Gelenkteile (21) mittels Schraubteilen miteinander verbunden sind, insbesondere wobei eine jeweilige Verbindungsschraube durch eine jeweilige Ausnehmung eines Gelenkteils durchgeführt ist und in eine Gewindebohrung des jeweils anderen Gelenkteils eingeschraubt ist, wobei der jeweilige Schraubenkopf das jeweilige Gelenkteil gegen das jeweils andere Gelenkteil drückt.

3. Linearantrieb nach einem der vorangegangenen Ansprüche, **dadurch gekennzeichnet, dass**
der in Spindelachsrichtung vom Lagerschild (1) überdeckte Bereich mit dem vom Kardangelenk und/oder von den ersten und/oder zweiten Erhebungen in Spindelachsrichtung überdeckten Bereich zumindest überlappt.

4. Linearantrieb nach einem der vorangegangenen Ansprüche, **dadurch gekennzeichnet, dass**
der in Spindelachsrichtung vom vom Lagerschild (1) aufgenommenen Lager überdeckte Bereich mit dem vom Kardangelenk, von den beiden Gelenkteile (21) des Kardangelenks und/oder von den ersten und/oder zweiten Erhebungen in Spindelachsrichtung überdeckten Bereich zumindest überlappt.

5. Linearantrieb nach einem der vorangegangenen Ansprüche, **dadurch gekennzeichnet, dass** die ersten und/oder zweiten Erhebungen zylinderförmig ausgebildet sind und/oder dass die am jeweiligen Gelenkteil angeordnete Ausnehmung zur Verbindung mit Spielpassung mit der jeweiligen ersten Erhebung zylinderförmig ausgebildet ist.

6. Linearantrieb nach einem der vorangegangenen Ansprüche, **dadurch gekennzeichnet, dass**
jedes Gelenkteil einen L-förmigen Grundkörper aufweist, wobei an einem ersten Schenkel des L die zweite Erhebung angeordnet ist und an dem anderen Schenkel die Ausnehmung angeordnet ist.

7. Linearantrieb nach einem der vorangegangenen Ansprüche, **dadurch gekennzeichnet, dass**
die beiden Gelenkteile (21) des Kardangelenks gleichartig ausgeführt sind.

8. Linearantrieb nach einem der vorangegangenen Ansprüche, **dadurch gekennzeichnet, dass**
mittels des im Lagerschild (1) aufgenommenen Lagers die Spindelmutter (20) drehbar gelagert ist, wobei die Spindelmutter (20) drehfest mit einem ersten Verzahnungsteils eines Riemengetriebes verbunden ist, dessen Verzahnung mit einer Verzahnung eines Riemens des Riemengetriebes im Eingriff ist, wobei die Verzahnung des Riemens mit der Verzahnung eines vom ersten Verzahnungsteil beabstandeten zweiten Verzahnungsteils im Eingriff ist,
wobei das zweite Verzahnungsteil drehfest mit der Rotorwelle eines Elektromotors (7) verbunden ist,
oder dass
mittels des im Lagerschild (1) aufgenommenen Lagers die Spindelmutter (20) drehbar gelagert ist, wobei die Spindelmutter (20) drehfest mit einer ersten Riemenscheibe eines Riementriebs kraftschlüssig verbunden ist, wobei der Riemen (10) kraftschlüssig mit einer zweiten Riemenscheibe verbunden ist, welche beabstandet von der ersten Riemenscheibe ist, insbesondere in Querrichtung zur Achsrichtung der Spindel,
wobei die zweite Riemenscheibe drehfest mit der Rotorwelle eines Elektromotors (7) verbunden ist,

9. Linearantrieb nach einem der Ansprüche 1 bis 7,
**dadurch gekennzeichnet, dass**
mittels des im Lagerschild (1) aufgenommenen Lagers die Spindel (17) drehbar gelagert ist,
wobei die Spindelmutter (20) parallel zur Achsrichtung der Spindel (17) verschiebbar angeordnet ist,
insbesondere indem die Spindelmutter (20) mit einem in eine Nut zumindest teilweise hineinragenden Nutenstein verbunden ist, wobei die Nut sich parallel zur Achsrichtung der Spindel (17) erstreckt, insbesondere in einem Gehäuseteil (6) des Linearantriebs, wobei die Spindel (17) drehfest mit der Rotorwelle eines Elektromotors (7) verbunden ist,
insbesondere wobei mit der Spindelmutter (20) eine Kolbenstange verbunden ist, welche an einem Endbereich des Linearantriebs hervorragt,
insbesondere wobei am von der Spindelmutter (20) abgewandten Endbereich der Kolbenstange ein Teil der anzutreibenden Vorrichtung mittels Kardangelenk verbindbar ist..

10. Linearantrieb nach Anspruch 9,
**dadurch gekennzeichnet, dass**
die Spindel (17) drehfest mit der Rotorwelle eines Elektromotors (7) verbunden ist
oder dass
die Spindel (17) drehfest mit einer ersten Riemenscheibe eines Riementriebs kraftschlüssig verbunden ist, wobei der Riemen (10) mit einer zweiten Riemenscheibe kraftschlüssig verbunden ist, welches drehfest mit der Rotorwelle eines Elektromotors (7) verbunden ist und beabstandet ist von der ersten Riemenscheibe, insbesondere in Querrichtung zur Achsrichtung der Spindel,
oder dass
die Spindel (17) drehfest mit einem ersten Verzahnungsteil verbunden ist, dessen Verzahnung mit der Verzahnung eines Riemens eines Riementriebs im Eingriff ist, wobei die Verzahnung des Riemens mit der Verzahnung eines zweiten Verzahnungsteils im Eingriff ist, wobei das zweite Verzahnungsteil drehfest mit der Rotorwelle eines Elektromotors (7) verbunden ist und beabstandet ist von dem ersten Verzahnungsteil, insbesondere in Querrichtung zur Achsrichtung der Spindel.

11. Linearantrieb nach einem der vorangegangenen Ansprüche, **dadurch gekennzeichnet, dass**
die Spindelmutter (20) in einem Lagerschild (1) drehbar gelagert ist,
wobei die Spindel (17) durch die Spindelmutter (20) hindurchgeführt ist, und/oder die Spindel (17) beidseitig aus dem Lagerschild (1) hervorragt,
wobei ein erster Faltenbalg (5) einen ersten Bereich der Spindel (17) zumindest teilweise umgibt und ein zweiter Faltenbalg (12) einen zweiten Bereich der Spindel (17) zumindest teilweise umgibt,
insbesondere wobei der erste Bereich und der zweite Bereich voneinander beabstandet sind, insbesondere wobei zumindest das Lagerschild (1) zwischengeordnet ist,
wobei das Lagerschild (1) eine durchgehende Ausnehmung aufweist zum Luftdruckausgleich zwischen dem von dem ersten Faltenbalg (5) umgebenen Luftraum und dem von dem zweiten Faltenbalg (12) umgebenen Luftraum.

12. Linearantrieb nach Anspruch 11,
**dadurch gekennzeichnet, dass**
das Lagerschild (1) zwischen dem ersten und dem zweiten Faltenbalg (5, 12) angeordnet ist, insbesondere also der erste Faltenbalg (5) vom zweiten Faltenbalg (12) beabstandet ist, insbesondere mittels zumindest des Lagerschilds (1)

13. Linearantrieb nach einem der Ansprüche 11 oder 12, **dadurch gekennzeichnet, dass**
der erste Faltenbalg (5) mit einem Abdeckteil (18) verbunden ist, welches lösbar verbunden ist mit einem Deckelteil (9) eines Riementriebs,
wobei das Deckelteil (9) mit einem Gehäuseteil (6) des Riementriebs verbunden ist, welches mit dem Lagerschild (1) verbunden ist, insbesondere an dessen vom zweiten Faltenbalg (12) abgewandten Seite des Lagerschilds (1),
wobei das Lagerschild (1), insbesondere an dessen vom ersten Faltenbalg (5) abgewandter Seite, mit einem Deckelteil (3) verbunden oder einstückig ausgeführt ist,
wobei der zweite Faltenbalg (12) mit dem Deckelteil (3) verbunden ist.

14. Linearantrieb nach Anspruch 13, **dadurch gekennzeichnet, dass**
das Abdeckteil (18) eine durchgehende Ausnehmung aufweist, welche einen Luftdurchlass zwischen dem von dem ersten Faltenbalg (5) umgebenen Luftraum und dem vom Riementrieb, insbesondere vom Gehäuseteil (6) des Riementriebs umgebenen und vom Deckelteil (9) sowie vom Abdeckteil (18) Luftraum, umgebenen Luftraum bewirkt, und/oder dass
das insbesondere mit dem zweiten Faltenbalg (12) verbundene Deckelteil (3) eine durchgehende Ausnehmung aufweist, welche einen Luftdurchlass zwischen dem von dem zweiten Faltenbalg (12) umgebenen Luftraum und der durch das Lagerschild (1) durchgehenden Ausnehmung bewirkt,
und/oder dass
das Lagerschild (1) ein Lager aufnimmt und die durch das Lagerschild (1) durchgehende Ausnehmung vom Lager beabstandet ist,
insbesondere einen größeren Radialabstand aufweist als das Lager, insbesondere zur Achse der Spindel,
und/oder dass
die durch das Lagerschild (1) durchgehende Ausnehmung einerseits in die durch das Deckteil (3) durchgehende Ausnehmung mündet und andererseits in den vom Riementrieb umgebenen Luftraum,
und/oder dass
im Lagerschild (1) oder vom Deckelteil (3) ein Wellendichtring aufgenommen ist, welcher zur Spindelmutter (20) hin abdichtet,
insbesondere wobei der vom zweiten Faltenbalg (12) umgebene Luftraum gegenüber dem vom Lager überdeckten Raumbereich abgedichtet ist mittels des Wellendichtrings,
und/oder dass
am Lagerschild (1) in Querrichtung zur Achsrichtung der Spindel (17) hervorragende Erhebungen ausgeformt sind, an welchen die anzutreibende Vorrichtung mittels eines Kardangelenks oder Kreuzgelenks verbindbar ist,
insbesondere wobei die Drehachsen dieses Gelenks jeweils senkrecht zur Achsrichtung der Spindel (17) ausgerichtet sind, insbesondere wobei die Drehachsen einen verschwindenden Abstand zueinander aufweisen,
und/oder dass
am Lagerschild (1) in Querrichtung zur Achsrichtung der Spindel (17) hervorragende Erhebungen ausgeformt sind, an welchen ein Kardangelenk oder Kreuzgelenk angeordnet ist zur Verbindung mit einer anzutreibenden Vorrichtung,
insbesondere wobei die Drehachsen dieses Gelenks jeweils senkrecht zur Achsrichtung der Spindel (17) ausgerichtet sind, insbesondere wobei die Drehachsen einen verschwindenden Abstand zueinander aufweisen.

15. Linearantrieb nach einem der vorangegangenen Ansprüche, **dadurch gekennzeichnet, dass**
an einem Endbereich der Spindel (17) ein Kardangelenk, Kreuzgelenk oder Kugelgelenk zur Verbindung mit einem Teil der anzutreibenden Vorrichtung angeordnet ist,
insbesondere wobei die Drehachsen dieses Gelenks jeweils senkrecht zur Achsrichtung der Spindel (17) ausgerichtet sind, insbesondere wobei die Drehachsen voneinander beabstandet sind.

## Claims

1. Linear drive comprising a spindle nut (20) and a spindle (17), and comprising an end shield (1) in which a bearing (2) for rotatably mounting the spindle nut (20) or spindle is received,
the spindle (17) being screwed into the spindle nut (20),
first projections that protrude on either side in the transverse direction to the axis of the spindle (17) being formed on the end shield (1) for connecting, by means of a fixed, in particular a non-cantilever, Cardan joint or universal joint, to a device to be driven,
**characterised in that**
two interconnected joint parts (21) have second projections (82) protruding in the transverse direction to the axis of the spindle (17), in particular one projection being formed on each of the joint parts (21),
each of the joint parts (21) having an cavity (81), into each of which a first projection of the end shield (1) is inserted, in particular by means of a clearance fit in each case, in particular therefore by means of a fit having backlash in each case,
the second projections (82) being oriented perpendicularly to the first projections.

2. Linear drive according to claim 1,
**characterised in that**
in order for the force to be transmitted in a positive manner and for the two joint parts (21) to be centred relative to one another, bolts protrude on either side into cavities in each of the joint parts (21), the two joint parts (21) in particular being interconnected by means of screw parts, each connection screw in particular being guided through a respective cavity in one joint part and being screwed into a threaded hole in the other joint part, each screw head pressing the respective joint part against the other joint part.

3. Linear drive according to any of the preceding claims,
**characterised in that**
the region covered by the end shield (1) in the spindle axial direction at least overlaps the region covered by the Cardan joint and/or by the first and/or second projections in the spindle axial direction.

4. Linear drive according to any of the preceding claims,
**characterised in that**
the region covered in the spindle axial direction by the bearing received by the end shield (1) at least overlaps the region covered by the Cardan joint, by the two joint parts (21) of the Cardan joint and/or by the first and/or second projections in the spindle axial direction.

5. Linear drive according to any of the preceding claims,
**characterised in that**
the first and/or second projections are cylindrical,
and/or **in that** the cavity arranged in each joint part is cylindrical in order to connect to the relevant first projection with a clearance fit.

6. Linear drive according to any of the preceding claims,
**characterised in that**
each joint part has an L-shaped main body, the second projection being arranged on a first leg of the L and the cavity being arranged in the other leg.

7. Linear drive according to any of the preceding claims,
**characterised in that**
the two joint parts (21) of the Cardan joint are identical.

8. Linear drive according to any of the preceding claims,
**characterised in that**
the spindle nut (20) is rotatably mounted by means of the bearing received in the end shield (1), the spindle nut (20) being connected for conjoint rotation to a first toothed part of a belt drive, the teeth of said toothed part engaging with teeth of a belt of the belt drive, the teeth of the belt engaging with the teeth of a second toothed part spaced apart from the first toothed part,
the second toothed part being connected to the rotor shaft of an electric motor (7) for conjoint rotation,
or **in that**
the spindle nut (20) is rotatably mounted by means of the bearing received in the end shield (1), the spindle nut (20) being frictionally connected to a first belt pulley of a belt drive for conjoint rotation, the belt (10) being frictionally connected to a second belt pulley spaced apart from the first belt pulley, in particular in the transverse direction to the axial direction of the spindle,
the second belt pulley being connected to the rotor shaft of an electric motor (7) for conjoint rotation.

9. Linear drive according to any of claims 1 to 7,
**characterised in that**
the spindle (17) is rotatably mounted by means of the bearing received in the end shield (1), the spindle nut (20) being arranged so as to be displaceable in parallel with the axial direction of the spindle (17),
in particular by the spindle nut (20) being connected to a sliding block that protrudes at least in part into a groove, the groove extending in parallel with the axial direction of the spindle (17), in particular in a housing part (6) of the linear drive, the spindle (17) being connected to the rotor shaft of an electric motor (7) for conjoint rotation,
a piston rod that protrudes on an end region of the linear drive in particular being connected to the spindle nut (20),
a part of the device to be driven in particular being connectable, by means of a Cardan joint, to the piston rod end region facing away from the spindle nut (20).

10. Linear drive according to claim 9,
**characterised in that**
the spindle (17) is connected to the rotor shaft of an electric motor (7) for conjoint rotation, or **in that**
the spindle (17) is frictionally connected to a first belt pulley of a belt drive for conjoint rotation, the belt (10) being frictionally connected to a second belt pulley, which is connected to the rotor shaft of an electric motor (7) for conjoint rotation and is spaced apart from the first belt pulley, in particular in the transverse direction to the axial direction of the spindle, or **in that**
the spindle (17) is connected for conjoint rotation to a first toothed part, the teeth of which engage with the teeth of a belt of a belt drive, the teeth of the belt engaging with the teeth of a second toothed part, the second toothed part being connected to the rotor shaft of an electric motor (7) for conjoint rotation and being spaced apart from the first toothed part, in particular in the transverse direction to the axial direction of the spindle.

11. Linear drive according to any of the preceding claims,
**characterised in that**
the spindle nut (20) is rotatably mounted in an end shield (1),
the spindle (17) being guided through the spindle nut (20) and/or the spindle (17) protruding out of the end shield (1) on either side,
a first bellows (5) enclosing a first region of the spindle (17) at least in part and a second bellows (12) enclosing a second region of the spindle (17) at least in part,
the first region and the second region in particular being spaced apart from one another, the end shield (1) in particular being arranged therebetween,
the end shield (1) having a through-cavity for air pressure equalisation between the air space enclosed by the first bellows (5) and the air space enclosed by the second bellows (12).

12. Linear drive according to claim 11,
**characterised in that**
the end shield (1) is arranged between the first and the second bellows (5, 12), the first bellows (5) is thus in particular spaced apart from the second bellows (12), in particular at least by means of the end shield (1).

13. Linear drive according to any of claims 11 or 12,
**characterised in that**
the first bellows (5) is connected to a cover part (18), which is releasably connected to a lid part (9) of a belt drive,
the lid part (9) being connected to a housing part (6) of the belt drive, which housing part is connected to the end shield (1), in particular at the side of the end shield (1) facing away from the second bellows (12),
the end shield (1) being connected to a lid part (3) or configured in one piece therewith, in particular at its side facing away from the first bellows (5),
the second bellows (12) being connected to the lid part (3).

14. Linear drive according to claim 13,
**characterised in that**
the cover part (18) has a through-cavity, which creates an air passage between the air space enclosed by the first bellows (5) and the air space enclosed by the belt drive, in particular by the housing part (6) of the belt drive, the lid part (9) and the cover part (18),
and/or **in that**
the lid part (3) connected in particular to the second bellows (12) has a through-cavity, which creates an air passage between the air space enclosed by the second bellows (12) and the cavity extending through the end shield (1),
and/or **in that**
the end shield (1) receives a bearing and the cavity extending through the end shield (1) is spaced apart from the bearing,
in particular is at a greater radial distance than the bearing, in particular from the axis of the spindle,
and/or **in that**
the cavity extending through the end shield (1) opens at one end into the cavity extending through the lid part (3) and at the other end into the air space enclosed by the belt drive, and/or **in that**
a shaft seal ring is received in the end shield (1) or by the lid part (3) and forms a seal with respect to the spindle nut (20),
the air space enclosed by the second bellows (12) in particular being sealed, by means of the shaft seal ring, with respect to the spatial region covered by the bearing,
and/or **in that**
projections are formed on the end shield (1), which protrude in the transverse direction to the axial direction of the spindle (17) and to which the device to be driven can be connected by means of a Cardan joint or universal joint,
the axes of rotation of said joint in particular each being oriented perpendicularly to the axial direction of the spindle (17), the axes of rotation in particular being at an imperceptible distance from one another,
and/or **in that**
projections are formed on the end shield (1), which protrude in the transverse direction to the axial direction of the spindle (17) and on which a Cardan joint or universal joint is arranged for connecting to a device to be driven,
the axes of rotation of said joint in particular each being oriented perpendicularly to the axial direction of the spindle (17), the axes of rotation in particular being at an imperceptible distance from one another.

15. Linear drive according to any of the preceding claims,
**characterised in that**
a Cardan joint, universal joint or ball joint is arranged on an end region of the spindle (17) for connecting to a part of the device to be driven,
the axes of rotation of said joint in particular each being oriented perpendicularly to the axial direction of the spindle (17), the axes of rotation in particular being spaced apart from one another.

## Revendications

1. Entraînement linéaire comprenant un écrou (20) à broche et une broche (17), ainsi qu'un bouclier (1) de palier dans lequel un palier (2) est logé en vue du montage rotatif dudit écrou (20) à broche, ou de ladite broche,
laquelle broche (17) est vissée dans ledit écrou (20) à broche,
sachant que des premières protubérances, faisant saillie de part et d'autre dans le sens transversal par rapport à l'axe de la broche (17), sont façonnées sur le bouclier (1) de palier en vue de la liaison avec un dispositif, devant être entraîné, au moyen d'une articulation à Cardan ou d'une articulation à croisillon bivalente, notamment non trivalente,
**caractérisé par le fait que**
deux parties d'articulation (21), reliées l'une à l'autre, sont munies de secondes protubérances (82) faisant saillie dans le sens transversal par rapport à l'axe de la broche (17), sachant notamment qu'une protubérance respective est façonnée sur chacune des parties d'articulation (21),
chacune desdites parties d'articulation (21) comportant un évidement (81) dans lequel une première protubérance respective du bouclier (1) de palier est emboîtée en particulier, à chaque fois, au moyen d'un ajustement avec jeu, c'est-à-dire en particulier, à chaque fois, au moyen d'un ajustement présentant un jeu,
lesdites secondes protubérances (82) étant orientées perpendiculairement aux premières protubérances.

2. Entraînement linéaire selon la revendication 1,
**caractérisé par le fait que**
des goujons s'engagent à chaque fois, de part et d'autre, dans des évidements des parties d'articulation (21) en vue de la transmission de force par complémentarité de formes, et du centrage des deux parties d'articulation (21) l'une par rapport à l'autre,
lesdites deux parties d'articulation (21) étant notamment reliées l'une à l'autre au moyen de pièces de vissage, sachant, en particulier, qu'une vis respective de liaison est insérée à travers un évidement respectif d'une partie d'articulation et est vissée dans un perçage taraudé de l'autre partie d'articulation considérée, la tête de la vis respective de la partie d'articulation respective exerçant une pression contre l'autre partie d'articulation considérée.

3. Entraînement linéaire selon l'une des revendications précédentes,
**caractérisé par le fait que**
la région couverte par le bouclier (1) de palier, dans la direction de l'axe de la broche, se trouve au moins en chevauchement avec la région couverte, dans ladite direction de l'axe de la broche, par l'articulation à Cardan et/ou par les premières et/ou secondes protubérances.

4. Entraînement linéaire selon l'une des revendications précédentes,
**caractérisé par le fait que**
la région couverte par le palier logé dans le bouclier (1) de palier, dans la direction de l'axe de la broche, se trouve au moins en chevauchement avec la région couverte, dans ladite direction de l'axe de la broche, par les deux parties (21) de l'articulation à Cardan et/ou par les premières et/ou secondes protubérances.

5. Entraînement linéaire selon l'une des revendications précédentes,
**caractérisé par le fait que**
les premières et/ou secondes protubérances sont de réalisation cylindrique ;
et/ou **par le fait que** l'évidement, situé sur la partie d'articulation considérée, est de réalisation cylindrique en vue de la liaison avec la première protubérance respective, par ajustement avec jeu.

6. Entraînement linéaire selon l'une des revendications précédentes,
**caractérisé par le fait que**
chaque partie d'articulation est pourvue d'un corps de base configuré en L, la seconde protubérance étant située sur une première branche du L, et l'évidement étant disposé sur l'autre branche.

7. Entraînement linéaire selon l'une des revendications précédentes,
**caractérisé par le fait que**
les deux parties (21) de l'articulation à Cardan présentent des réalisations de même type.

8. Entraînement linéaire selon l'une des revendications précédentes,
**caractérisé par le fait que**
l'écrou (20) à broche est monté à rotation au moyen du palier logé dans le bouclier (1) de palier, ledit écrou (20) à broche étant relié, avec verrouillage rotatif, à une première partie dentée d'une transmission par courroie dont la denture est en prise avec une denture d'une courroie de ladite transmission par courroie, laquelle denture de la courroie est en prise avec la denture d'une seconde partie dentée distante de ladite première partie dentée, laquelle seconde partie dentée est reliée, avec verrouillage rotatif, à l'arbre rotorique d'un moteur électrique (7) ;
ou **par le fait que**
l'écrou (20) à broche est monté à rotation au moyen du palier logé dans le bouclier (1) de palier, ledit écrou (20) à broche étant relié par engagement positif, avec verrouillage rotatif, à une première poulie d'un entraînement par courroie, laquelle courroie (10) est reliée, par engagement positif, à une seconde poulie distante de ladite première poulie, en particulier dans le sens transversal par rapport à la direction de l'axe de la broche, laquelle seconde poulie est reliée, avec verrouillage rotatif, à l'arbre rotorique d'un moteur électrique (7).

9. Entraînement linéaire selon l'une des revendications 1 à 7,
**caractérisé par le fait que**
la broche (17) est montée à rotation au moyen du palier logé dans le bouclier (1) de palier, l'écrou (20) à broche étant agencé avec faculté de déplacement parallèlement à la direction de l'axe de ladite broche (17),
notamment du fait que ledit écrou (20) à broche est relié à un coulisseau pénétrant au moins en partie dans une rainure, laquelle rainure s'étend parallèlement à la direction dudit axe de la broche (17), notamment dans une partie (6) formant carter dudit entraînement linéaire, ladite broche (17) étant reliée, avec verrouillage rotatif, à l'arbre rotorique d'un moteur électrique (7),
sachant, en particulier, qu'une tige de piston, reliée audit écrou (20) à broche, fait saillie au-delà d'une région extrême dudit entraînement linéaire,
sachant notamment qu'une partie du dispositif à entraîner peut être reliée, au moyen d'une articulation à Cardan, à la région extrême de ladite tige de piston qui est tournée à l'opposé dudit écrou (20) à broche.

10. Entraînement linéaire selon la revendication 9,
**caractérisé par le fait que**
la broche (17) est reliée, avec verrouillage rotatif, à l'arbre rotorique d'un moteur électrique (7) ;
ou **par le fait que**
ladite broche (17) est reliée par engagement positif, avec verrouillage rotatif, à une première poulie d'un entraînement par courroie, laquelle courroie (10) est reliée, par engagement positif, à une seconde poulie qui est reliée, avec verrouillage rotatif, à l'arbre rotorique d'un moteur électrique (7) et est distante de ladite première poulie, en particulier dans le sens transversal par rapport à la direction de l'axe de ladite broche ;
ou **par le fait que**
ladite broche (17) est reliée, avec verrouillage rotatif, à une première partie dentée dont la denture est en prise avec la denture d'une courroie d'un entraînement par courroie, laquelle denture de la courroie est en prise avec la denture d'une seconde partie dentée, laquelle seconde partie dentée est reliée, avec verrouillage rotatif, à l'arbre rotorique d'un moteur électrique (7) et est distante de ladite première partie dentée, en particulier dans le sens transversal par rapport à la direction de l'axe de ladite broche.

11. Entraînement linéaire selon l'une des revendications précédentes,
**caractérisé par le fait que**
l'écrou (20) à broche est monté à rotation dans un bouclier (1) de palier,
sachant que la broche (17) est guidée à travers ledit écrou (20) à broche, et/ou que ladite broche (17) fait saillie de part et d'autre au-delà dudit bouclier (1) de palier,
un premier soufflet (5) entourant, au moins partiellement, une première région de la broche (17) et un second soufflet (12) entourant, au moins partiellement, une seconde région de ladite broche (17),
sachant notamment que ladite première région et ladite seconde région sont distantes l'une de l'autre,
au moins, en particulier, avec interposition dudit bouclier (1) de palier,
lequel bouclier (1) de palier est muni d'un évidement continu, en vue de l'équilibrage de la pression de l'air entre l'espace ceinturé par ledit premier soufflet (5) et l'espace ceinturé par ledit second soufflet (12).

12. Entraînement linéaire selon la revendication 11,
**caractérisé par le fait que**
le bouclier (1) de palier est interposé entre les premier et second soufflets (5, 12), c'est-à-dire, en particulier, que le premier soufflet (5) est distant du second soufflet (12), notamment au moins à l'aide dudit bouclier (1) de palier.

13. Entraînement linéaire selon l'une des revendications 11 ou 12,
**caractérisé par le fait que**
le premier soufflet (5) est relié à une partie de recouvrement (18) reliée, de manière libérable, à une partie (9) formant couvercle d'un entraînement par courroie,
laquelle partie (9), formant couvercle, est reliée à une partie (6) formant carter dudit entraînement par courroie qui est reliée au bouclier (1) de palier, en particulier du côté dudit bouclier (1) de palier qui pointe à l'opposé du second soufflet (12),
sachant que, notamment sur son côté pointant à l'opposé du premier soufflet (5), ledit bouclier (1) de palier est relié à une partie (3) formant couvercle ou est réalisé d'une seule pièce,
ledit second soufflet (12) étant relié à ladite partie (3) formant couvercle.

14. Entraînement linéaire selon la revendication 13,
**caractérisé par le fait que**
la partie de recouvrement (18) est dotée d'un évidement continu procurant un passage d'air entre l'espace ceinturé par le premier soufflet (5) et l'espace ceinturé par l'entraînement par courroie, notamment par la partie (6) formant carter dudit entraînement par courroie et par la partie (9) formant couvercle, ainsi que par ladite partie de recouvrement (18) ;
et/ou **par le fait que**
la partie (3) formant couvercle, notamment reliée au second soufflet (12), est munie d'un évidement continu procurant un passage d'air entre l'espace ceinturé par ledit second soufflet (12), et l'évidement continu qui traverse le bouclier (1) de palier ;
et/ou **par le fait que**
le bouclier (1) de palier reçoit un palier, et l'évidement traversant ledit bouclier (1) de palier est distant dudit palier
et présente, en particulier, un plus grand espacement radial que ledit palier, notamment par rapport à l'axe de la broche ;
et/ou **par le fait que**
ledit évidement traversant le bouclier (1) de palier débouche, d'une part, dans l'évidement traversant la partie (3) formant couvercle et, d'autre part, dans l'espace ceinturé par l'entraînement par courroie ;
et/ou **par le fait**
**qu'**une bague d'étanchement d'arbre, logée dans ledit bouclier (1) de palier ou reçue par ladite partie (3) formant couvercle, assure l'étanchéité en direction de l'écrou (20) à broche,
sachant notamment que l'étanchéité de l'espace ceinturé par le second soufflet (12) est assurée, au moyen de ladite bague d'étanchement d'arbre, par rapport à la région spatiale couverte par le palier ;
et/ou **par le fait que**
des protubérances faisant saillie dans le sens transversal par rapport à la direction de l'axe de la broche (17) et auxquelles le dispositif, devant être entraîné, peut être relié au moyen d'une articulation à Cardan ou d'une articulation à croisillon, sont façonnées sur ledit bouclier (1) de palier,
sachant notamment que les axes de rotation de cette articulation sont orientés, à chaque fois, perpendiculairement à la direction dudit axe de la broche (17), lesquels axes de rotation présentent, en particulier, un espacement mutuel infime ;
et/ou **par le fait que**
des protubérances faisant saillie dans le sens transversal par rapport à la direction de l'axe de la broche (17), et sur lesquelles une articulation à Cardan ou une articulation à croisillon est implantée en vue de la liaison avec un dispositif à entraîner, sont façonnées sur ledit bouclier (1) de palier,
sachant notamment que les axes de rotation de cette articulation sont orientés, à chaque fois, perpendiculairement à la direction dudit axe de la broche (17), lesquels axes de rotation présentent, en particulier, un espacement mutuel infime.

15. Entraînement linéaire selon l'une des revendications précédentes,
**caractérisé par le fait**
**qu'**une articulation à Cardan, une articulation à croisillon ou une articulation à rotule est implantée sur une région extrême de la broche (17), en vue de la liaison avec une partie du dispositif devant être entraîné,
sachant notamment que les axes de rotation de cette articulation sont orientés, à chaque fois, perpendiculairement à la direction de l'axe de ladite broche (17), lesquels axes de rotation sont notamment agencés avec espacement mutuel.
